# EUROPEAN PATENT APPLICATION

(11) **EP 0 748 593 A1**
(43) Date of publication of application: **18.12.1996**
(21) Application number: 96109510.6
(22) Date of filing: 13.06.1996
(51) Int. Cl.: A24C 5/35

(54) **Bulk conveyor assembly for cigarettes**

(30) Priority: 14.06.1995 IT BO950301
(71) Applicant: G.D SOCIETA' PER AZIONI, I-40100 Bologna (IT)
(72) Inventor: Brizzi, Marco, 40069 Zola Predosa (IT); Fiori, Marco, 40132 Bologna (IT); Gamberini, Antonio, 40100 Bologna (IT)
(74) Representative: Jorio, Paolo

(57) **Abstract**

A bulk conveyor assembly (1) for cigarettes (2), wherein a first one-way conveyor (7) presents a downflow portion (9) extending through a junction (14) of the first conveyor (7) at one end of a second conveyor (18) movable in at least one direction (27) to remove cigarettes (2) from the junction (14); the junction (14) connecting an input portion (15) and an output portion (16) of the first conveyor (7); the input portion (15) presenting a cross section larger than the output portion (16); and the second conveyor (18) extending crosswise to the downflow portion (9) from the junction (14), and being defined by an upper wall (22) and by a lower wall (23) which projects, in relation to the upper wall (22), towards the junction (14) so as to interfere with a stream (29) of cigarettes (2) traveling downwards through the junction (14).

## Description

The present invention relates to a bulk conveyor assembly for cigarettes.

More specifically, the present invention relates to a bulk conveyor assembly for cigarettes, of the type comprising a first one-way conveyor presenting a downflow portion; a junction located along the downflow portion and dividing the downflow portion into an upper input portion and a lower output portion; and a second conveyor extending crosswise to the downflow portion and connected to the first conveyor at the junction, the second conveyor being movable in at least one direction to remove the cigarettes from the junction, and presenting a bottom wall for supporting a mass of cigarettes, and a top wall facing the bottom wall.

The present invention is especially suitable for feeding cigarettes from the output of a cigarette manufacturing machine to the input of a packing machine, to which the following description refers purely by way of example.

In the tobacco industry, packing machines are supplied by a cigarette conveyor assembly comprising a supply conveyor for conveying the cigarettes in bulk, and which receives the cigarettes from the manufacturing machine and feeds them, via a downflow end portion, to the top end of a feedbox at the input of the packing machine.

The above known conveyor assembly also comprises a compensating store for compensating for any difference in the operating speeds of the manufacturing and packing machines, and which comprises an input-unloading compensating conveyor connected to the downflow end portion of the supply conveyor at a junction normally defined by a vertical conduit portion of substantially constant section and presenting a lateral opening communicating with one end of the compensating conveyor.

The above known conveyor assembly also comprises an expansion duct preferably located at the top of said downflow end portion, and which presents a sensor device for activating the compensating store in one direction or the other when the level of the cigarettes inside the duct fails to fall within a given range of values, and for arresting the machines connected by the supply conveyor when the difference between the optimum level and the actual level of the cigarettes inside the duct exceeds a given maximum value.

At times, conveyor assemblies of the above type fail to respond effectively to sharp variations in the operating speed of the two machines, particularly in the case of a sharp fall in the output speed of the packing machine. This, in fact, not only results in a sharp increase in the level of the cigarettes inside the expansion duct, so that the compensating conveyor is activated to remove the cigarettes from the junction, but also in compacting of the cigarettes along the whole of the downflow end portion of the supply conveyor, so that, at times, the compensating conveyor merely provides for creating a small gap at the opening communicating with the junction, and soon ceases to remove the cigarettes from the supply conveyor, thus arresting the whole system.

It is an object of the present invention to provide a conveyor assembly of the aforementioned type, designed to overcome the aforementioned drawback.

According to the present invention, there is provided a bulk conveyor assembly for cigarettes, the assembly comprising a first one-way conveyor presenting a downflow portion; a junction located along the downflow portion and dividing the downflow portion into an upper input portion and a lower output portion; and a second conveyor extending crosswise to said downflow portion and connected to the first conveyor at said junction; the second conveyor being movable in at least one direction to remove the cigarettes from the junction, and presenting a bottom wall supporting a mass of cigarettes, and a top wall facing the bottom wall; characterized in that the bottom wall projects, in relation to the top wall, by a given portion towards the junction, so as to interfere, in use, with a stream of cigarettes traveling through the junction.

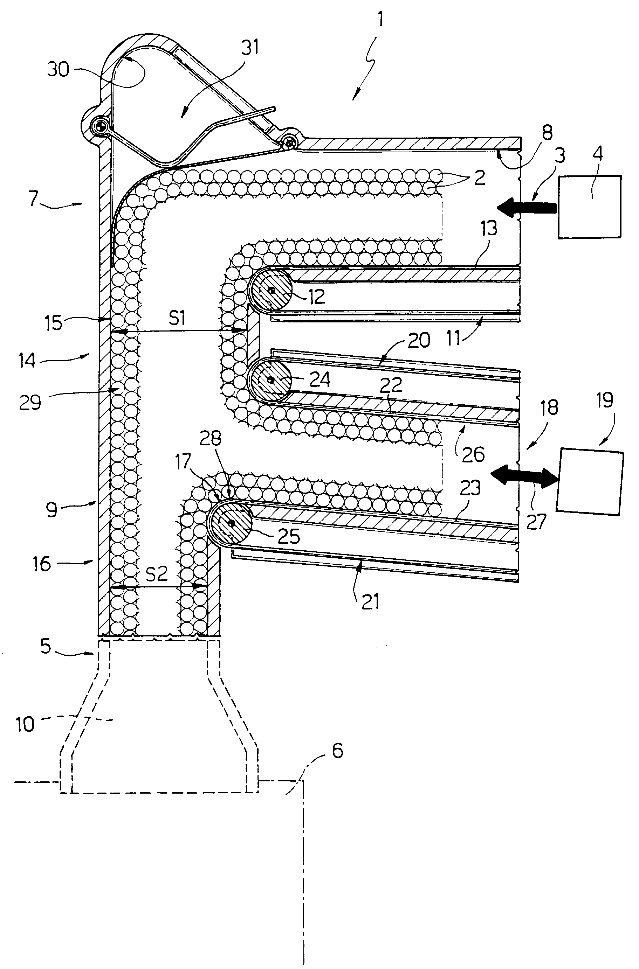

The present invention will be described with reference to the accompanying drawing showing a schematic section of a non-limiting embodiment.

Number 1 in the accompanying drawing indicates a conveyor assembly for supplying cigarettes 2 from the output 3 of one or more cigarette manufacturing machines 4 to the input 5 of a packing machine 6. Assembly 1 comprises a one-way conveyor 7 for supplying cigarettes 2 in bulk, and which receives cigarettes 2 from manufacturing machine/s 4 and feeds them along an upper supply channel 8 and along a downflow portion 9 of its own to input 5 defined by the input feedbox 10 of packing machine 6. Conveyor 7 comprises a conveyor belt 11 looped about respective pulleys 12 (only one shown) and presenting an upper transportation branch 13 defining a movable bottom wall of channel 8 for feeding cigarettes 2 along channel 8.

Downflow portion 9 extends downwards through a junction 14 defining, along portion 9, an input portion 15 and an output portion 16 of conveyor 7, which input portion 15 presents a cross section S1 larger than the cross section S2 of output portion 16. By means of a lateral opening 17 in an intermediate position between portions 15 and 16, junction 14 communicates with an input-unloading compensating conveyor 18 defining the input of a storage unit 19, which acts as an intermediate store between machine/s 4 and packing machine 6, and is preferably of the type described in US Patent n. 4,254,858 to which full reference is made herein in the interest of full disclosure.

Compensating conveyor 18 comprises two reversible endless conveyor belts 20 and 21 located facing and one over the other, and presenting respective transportation branches 22 and 23 looped about respective pulleys 24 and 25 at and on either side of opening 17. Branches 22 and 23 respectively define a top and bottom wall of a channel 26 substantially crosswise to portion 9 and communicating with junction 14 via opening 17, and are operated in known manner to feed cigarettes 2 along channel 26 in at least one direction 27 wherein cigarettes 2 are removed from junction 14. More specifically, branch 23 projects, in relation to branch 22, towards junction 14 by a given portion defining, at junction 14, a step 28, which interferes with at least a portion of a stream 29 of cigarettes 2 traveling downwards through junction 14, and detours part of said portion of stream 29 towards channel 26 in the event the output speed of machine/s 4 is greater than that of packing machine 6, in which case, unit 19 is called upon to absorb a quantity of cigarettes 2 equal to the difference in production.

Assembly 1 also comprises an expansion duct 30 located at the top of downflow portion 9, and presenting a known sensor device 31 for activating storage unit 19 in one direction or the other when the level of cigarettes 2 inside duct 30 fails to fall within a given range of values, and for arresting machines 4 and 6 when the difference between the optimum level and the actual level of cigarettes 2 inside duct 30 exceeds a given maximum value.

In actual use, conveyor belt 11 of one-way conveyor 7 feeds cigarettes 2, crosswise to their axis, along channel 8 to downflow portion 9 along which cigarettes 2 are fed by gravity, and still crosswise to their axis, through junction 14 and past lateral opening 17. Since section S1 of input portion 15 is greater than section S2 of output portion 16 of portion 9, and since cigarettes 2 in stream 29 are fed through junction 14 along respective substantially vertical paths parallel to one another, a portion of stream 29 is constantly engaged and supported by step 28.

In the event the level of cigarettes 2 inside duct 30 is found by sensor device 31 to be outside said given range of values, i.e. in the event the output speed of packing machine 6 is less than that of manufacturing machine/s 4, unit 19 is so activated by sensor device 31 as to accumulate cigarettes 2, and conveyor 18 starts to remove a portion of cigarettes 2 in stream 29 from junction 14 and through opening 17.

In the event of a fall in the output speed of packing machine 6, and unlike the known assemblies mentioned previously, removal of cigarettes 2 from junction 14 is therefore guaranteed by step 28, which ensures at least a portion of cigarettes 2 in stream 29 is maintained permanently contacting step 28 and, hence, transportation branch 23 of conveyor 18. This also provides for ensuring cigarettes 2 are fed through opening 17 by branch 23 and subsequently by branches 22 and 23, even in the event a sharp variation in output results in cigarettes 2 being rapidly compacted inside downflow portion 9.

## Claims

1. A bulk conveyor assembly (1) for cigarettes (2), the assembly (1) comprising a first one-way conveyor (7) presenting a downflow portion (9); a junction (14) located along the downflow portion (9) and dividing the downflow portion (9) into an upper input portion (15) and a lower output portion (16); and a second conveyor (18) extending crosswise to said downflow portion (9) and connected to the first conveyor (7) at said junction (14); the second conveyor (18) being movable in at least one direction (27) to remove the cigarettes (2) from the junction (14), and presenting a bottom wall (23) supporting a mass of cigarettes (2), and a top wall (22) facing the bottom wall (23); characterized in that the bottom wall (23) projects, in relation to the top wall (22), by a given portion (28) towards the junction (14), so as to interfere, in use, with a stream (29) of cigarettes (2) traveling through the junction (14).

2. An assembly as claimed in Claim 1, characterized in that said second conveyor (18) comprises an endless conveyor belt (21) presenting an upper transportation branch (23) for said cigarettes (2); said upper transportation branch (23) defining said bottom wall (23).

3. An assembly as claimed in Claim 2, characterized in that said second conveyor (18) comprises a further endless conveyor belt (20) presenting a lower transportation branch (22) for said cigarettes (2); said lower transportation branch (22) defining said upper wall (22).
